# EUROPEAN PATENT APPLICATION

(11) **EP 4 102 435 A1**
(43) Date of publication of application: **14.12.2022**
(21) Application number: 20917677.5
(22) Date of filing: 03.07.2020
(51) Int. Cl.: G06Q 20/40, G06Q 20/38, G06K 9/00, G06F 21/32, G06F 21/45

(54) **REGISTRATION AND PAYMENT METHOD, DEVICE, AND SYSTEM USING FACE INFORMATION**

(30) Priority: 07.02.2020 KR 20200014687
(71) Applicant: Shinhan Card Co., Ltd., Jung-gu Seoul 04551 (KR); LG CNS Co., Ltd., Seoul 07795 (KR)
(72) Inventor: RYOO, Tae Hyun, Gyeonggi-do 13532 (KR); PARK, Jae Wook, Seoul 04984 (KR); YI, Young Guk, Seoul 05504 (KR); OH, Sung Rock, Seoul 05229 (KR); CHOI, Taek Ho, Seoul 01232 (KR); LEE, Kyung Don, Seoul 03368 (KR); LIM, Sul Ki, Seongnam-si Gyeonggi-do 13144 (KR); JUN, Myung Hee, Seoul 07795 (KR); LEE, Sang Hyun, Seoul 07795 (KR)
(74) Representative: dompatent von Kreisler Selting Werner - Partnerschaft von Patent- und Rechtsanwälten mbB
(86) International application number: PCT/KR2020/008730
(87) International publication number: WO 2021/157790

(57) **Abstract**

A face information registration method performed by a terminal may comprise: acquiring customer information corresponding to a user; extracting biometric feature data from a face image of the user; acquiring card information of the user; requesting user registration while mapping the customer information, the biometric feature data, and the card information and transmitting same to an authentication server; and in response to successful registration of the customer information, the biometric feature data, and the card information in the authentication server, receiving a result of the registration from the authentication sever.

## Description

### Technical Field

Hereinafter, technology related to registration and payment using face information is provided.

### Background Art

A credit card is used instead of cash when a cardholder purchases certain goods or services, and is basic to a credit purchase manner that the amount used is paid through a payment account linked to the card on a designated date. In addition, a cardholder of a debit card may perform a cash purchase for goods and the like when the cardholder has a balance on a payment account of the debit card. Further, a cardholder of a cash card may withdraw cash or checks using an automated teller machine (ATM) of a bank. Recently, in addition to physical cards, financial applications that may replace cards are installed on smartphones and the like and replace payment means.

In using a physical card or a financial application payment means, it is very important to verify whether a user of the card is the true owner. As an example of verifying the authenticity of a user of a financial card, a signature of a cardholder is written on a signature block of a credit card, a photo of a cardholder is printed on the card, or a personal identification number (PIN) needs to be input every time the card is used.

However, the above-described methods have a limitation in that payment can be made only when a user carries a physical card, a smartphone, or other similar devices. Accordingly, there is a demand for a technology for enabling payment only by authentication through biometric information such as a fingerprint and a face and, furthermore, a technology for achieving higher security when such biometric information is used. In addition, convenience in changing card information and changing authentication information on mobile terminals is required.

### Disclosure of the Invention

### Technical Goals

According to an example embodiment, a system may provide payment using a face of a user without a need to carry a physical card and/or a device.

According to an example embodiment, a system may provide payment using biometric feature data extracted from a face image.

According to an example embodiment, a system may provide payment without a physical card.

According to an example embodiment, a system may store encrypted information in a distributed manner.

### Technical Solutions

According to an aspect, there is provided a face information registration method performed by a terminal, the face information registration method including acquiring customer information corresponding to a user, acquiring a face image of the user, acquiring card information of the user, requesting user registration while mapping the customer information, the face image, and the card information and transmitting same to an authentication server, and in response to successful registration of the customer information, biometric feature data extracted for the face image, and the card information in the authentication server, receiving a result of the registration from the authentication server.

The acquiring of the face image may include acquiring a two-dimensional face image after verifying that it is not a spoofed image using a three-dimensional depth camera.

The acquiring of the face image may include verifying a liveness of the face image through a stereo infrared ray sensor and a plurality of camera sensors.

The acquiring of the card information may include acquiring the card information based on one of an input of swiping a physical card, an input of inserting an integrated circuit (IC) unit of the physical card, and an input of a card serial number by the user.

The requesting of the user registration may include acquiring a user input of selecting one of pieces of card information stored in a user terminal, and transmitting the card information selected in response to the user input and the customer information to the authentication server, and separately transmitting a two-dimensional image for extracting the biometric feature data to the authentication server.

The requesting of the user registration may include optically acquiring two-dimensional code information indicating card information selected based on a user input, and mapping the selected card information and the face image based on the two-dimensional code information.

A face information registration method performed by a server includes receiving a payment information generation request from an authentication server that stores at least one of a plurality of pieces of biometric authentication information in which biometric feature data related to a face of a user is encrypted and stored in a distributed manner, verifying card information of a terminal in response to the payment information generation request being received, generating payment information based on the card information in response to the successful verification of the card information, and issuing the generated payment information to the authentication server to store same together with the biometric authentication information.

The verifying of the card information may include verifying the customer information together with the card information, the generating of the payment information may include generating the payment information in response to the successful verification of the customer information together with the card information, and the issuing of the payment information to the authentication server may include issuing the payment information to the authentication server to store same together with the biometric authentication information and the customer information.

The verifying of the customer information may include verifying whether the customer information is legitimate using connecting information (CI).

The verifying of the card information may include verifying whether a card indicated by the card information is valid.

The generating of the payment information may include generating a card identification number different from the card information as the payment information.

A payment method using face information performed by a terminal includes acquiring a face image from a user in response to face payment being selected by the user, requesting the face payment while transmitting the face image to an authentication server, and receiving a result of processing the face payment based on payment information and customer information identified by biometric feature data extracted from the face image.

The payment information may be information generated from card information indicating a physical card and used to generate fixed token information.

The payment method may further include calculating price information for an item picked up for purchase by the user, from at least one of a service and a product, and selecting the face payment as a payment method for the calculated price information in response to a user input.

A payment method using face information performed by a server includes receiving a generation request for fixed token information from an authentication server that stores at least one of a plurality of pieces of biometric authentication information in which biometric feature data related to a face of a user is encrypted and stored in a distributed manner, generating the fixed token information in response to the generation request, transmitting the generated fixed token information to the authentication server, verifying the fixed token information, in response a payment request by a terminal together with the fixed token information being received, and providing information related to payment approval based on a result of verifying the fixed token information.

The receiving of the generation request for the fixed token information may include receiving, from the authentication server, payment information identified based on biometric feature data extracted from a face image input by the user.

The generating of the fixed token information may include generating a random number as the fixed token information using the payment information.

The biometric feature data may be data extracted using a trained deep learning model from a two-dimensional face image acquired by capturing the face of the user using a three-dimensional depth camera.

According to an aspect, there is provided a face information registration method performed by an authentication server, the face information registration method including receiving a face information registration request including a face image, customer information, and card information of a user from a terminal, extracting biometric feature data for the face image, generating biometric authentication information by encrypting the biometric feature data, transmitting a payment information generation request including the customer information and the card information to the card processing server, receiving payment information issued by the card processing server as a result of identifying the user, mapping the biometric authentication information to at least one of the customer information and the payment information and storing same, and transmitting a face information registration result of the user to the terminal.

The generating of the biometric feature data may include extracting the biometric feature data from face images received from the terminal using a trained deep learning model.

The generating of the biometric authentication information by encrypting the biometric feature data may include generating encrypted biometric information by encrypting the biometric feature data, and generating a plurality of pieces of distributed biometric authentication information by separating the encrypted biometric information into a plurality of templates.

The mapping of the biometric authentication information to at least one of the customer information and the payment information and storing of the same may include mapping a facial identification number indicating a same user to the plurality of pieces of distributed biometric authentication information and storing same in a distributed manner in the authentication server and at least one distributed server.

The facial identification number may be mapped to at least one of the customer information and the payment information of the user and stored in a user table included in the authentication server.

According to an aspect, there is provided a payment method using face information performed by an authentication server, the payment method including receiving a facial authentication request including a face image of a user from a terminal, extracting biometric feature data from the face image, determining whether biometric authentication information matching the biometric feature data is present among previously stored biometric authentication information, requesting fixed token information from a card processing server using payment information and customer information corresponding to the matching biometric authentication information, receiving fixed token information issued by the card processing server as a result of verifying the user based on the customer information and the payment information, and transmitting a facial authentication result of the user to the terminal.

The facial authentication result of the user may include the fixed token information.

The payment method may further include transmitting the fixed token information and a payment approval request for an item that the user desires to purchase to an affiliate server, in response to receiving the fixed token information from the card processing server.

The searching for of the biometric authentication information matching the biometric feature data from among the previously stored biometric authentication information may include determining whether combined biometric authentication information matching the extracted biometric feature data is present among combined biometric authentication information generated by combining a plurality of pieces of biometric authentication information that are stored in a distributed manner in the authentication server and at least one distributed server.

The requesting of the fixed token information from the card processing server using the payment information and the customer information corresponding to the matching biometric authentication information may include identifying at least one of customer information and payment information of a user corresponding to the matching biometric authentication information, through a user table in which a facial identification number mapped to the matching biometric authentication information is stored.

The determining of whether the matching biometric authentication information is present may include calculating a matching similarity between the biometric authentication information and the extracted biometric feature data, and determining that the biometric authentication information and the extracted biometric feature data match when the matching similarity exceeds a predetermined threshold similarity.

### Advantageous Effects

According to an example embodiment, a system may provide the convenience of performing payment using a face of a user without a need to carry a physical card and/or a device.

According to an example embodiment, a system may provide faster payment processing through a simplified procedure of recognizing a face without a complicated procedure such as reading a card or executing an application on a terminal.

According to an example embodiment, a system may prevent a physical card from risk of being stolen and lost.

According to an example embodiment, a system may prevent hacking by storing biometric feature information in a distributed manner.

According to an example embodiment, biometric feature data extracted from a face image acquired by a mobile terminal and biometric feature data extracted from a face image acquired by a dedicated terminal are compatible with each other, and thus, a system may allow a user to use a payment service using a face without limitation of a platform.

According to an example embodiment, a system uses a fixed token and thus, may allow a merchant to utilize existing payment solutions without additional professional development.

According to an example embodiment, a system may allow an authentication center to efficiently unify and manage information.

According to an example embodiment, a system may allow a user of a mobile terminal to conveniently register and change information.

### Brief Description of Drawings

FIG. 1 is a block diagram illustrating a system for registration and payment using face information according to an example embodiment.
FIG. 2 is a diagram illustrating a general flow of a system for registration and payment using face information according to an example embodiment.
FIG. 3 is a flowchart illustrating a face information registration method according to an example embodiment.
FIG. 4 is a diagram illustrating a detailed process of face information registration according to an example embodiment.
FIGS. 5 and 6 are diagrams illustrating an example of acquiring card information in face information registration according to an example embodiment.
FIGS. 7 and 8 are diagrams illustrating an identity verification process in face information registration according to an example embodiment.
FIG. 9 is a diagram illustrating a process of storing biometric authentication information in face information registration according to an example embodiment.
FIG. 10 is a diagram illustrating an example of storing biometric authentication information in a distributed manner in face information registration according to an example embodiment.
FIG. 11 is a flowchart illustrating a payment method using face information according to an example embodiment.
FIG. 12 is a diagram illustrating a detailed process of payment using face information according to an example embodiment.
FIG. 13 is a diagram illustrating a process of generating fixed token information in payment using face information according to an example embodiment.
FIG. 14 is a block diagram illustrating a configuration of a terminal according to an embodiment.
FIG. 15 is a block diagram illustrating a configuration of a server according to an embodiment.

### Best Mode for Carrying Out the Invention

Hereinafter, example embodiments will be described in detail with reference to the accompanying drawings. However, various alterations and modifications may be made to the example embodiments. Here, the example embodiments are not construed as limited to the disclosure. The example embodiments should be understood to include all changes, equivalents, and replacements within the idea and the technical scope of the disclosure.

The terminology used herein is for the purpose of describing particular example embodiments only and is not to be limiting of the example embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

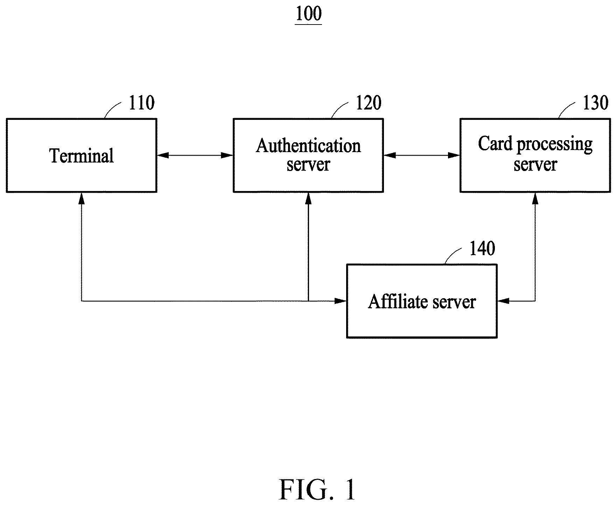

FIG. 1 is a block diagram illustrating a system for registration and payment using face information according to an example embodiment.

A system 100 for registration and payment using face information according to an example embodiment may provide a service for registering face information and a payment service using face information. For example, the system 100 may include a terminal 110, an authentication server 120, a card processing server 130, and an affiliate server 140.

The terminal 110 may acquire customer information of a user, face information of the user, and card information of the user in the process of registration using face information. The terminal 110 may transmit a face information registration request while mapping the acquired customer information, face information, and card information and providing same to the authentication server 120. The face information registration request may include a face image, the customer information, and the card information. The terminal 110 may acquire face information and provide the acquired face information to the authentication server 120 to request payment for a product and/or a service, in the payment use process. The terminal 110 may include a mobile terminal (e.g., a smartphone, etc.) carried by a user and a dedicated terminal (e.g., a kiosk terminal) installed in a store.

The customer information may be information related to a customer who uses a card and include, for example, information related to an identity of the customer (e.g., CI information based on a name, a social security number, etc.), and may be identified through an identity verification process which will be described later. The face information may be information about the face of the user, for example, information about feature points of the face of the user. The information about the feature points may include biometric feature data generated by extracting biometric features of the face in a digital form. The feature points may be points indicating sites that are features on the face of the user and may indicate, for example, the eyes, the mouth, the nose, and the chin of the face. The biometric feature data may be data indicating the biometric features, for example, data extracted from the face image using a pre-trained deep learning model, and may be, for example, feature vectors abstractly indicating, for example, angles and distances between the eyes, the mouth, the nose, and the chin, and degrees of protrusion of bones in a digital form. The card information may be information related to a financial payment means including a physical card, an application card (hereinafter, an app card), and the like, and may indicate, for example, a serial number of a physical card issued to a predetermined user. However, the customer information, the face information, and the card information are merely examples, and are not limited thereto, and may vary according to a design. The app card may be a virtual card registered in an app card-dedicated application on a mobile terminal (e.g., a smartphone) in correspondence to a conventional physical magnetic card, so that the physical magnetic card may be used for offline, online, and mobile payment.

Herein, a deep learning model may be a model designed to extract feature data related to the above-described feature points from a human face image. For example, the deep learning model may be a neural network.

In addition, herein, a card has been mainly described with an example of a credit card, but is not limited thereto, and may include a financial payment means used to purchase a product and/or a service and may be, for example, a debit card, an app card, or the like.

The authentication server 120 may be a server for storing biometric authentication information in a distributed manner. The biometric authentication information may be biometrics-related information stored for authentication and may be, for example, information in which the above-described biometric feature data is encrypted and distributed. The authentication server 120 may extract feature data by means of an inference server for the face information (e.g., the face image) received from the terminal 110 in face information registration, and store the extracted feature data to be divided by predetermined templates. The authentication server 120 may receive biometric feature data from the terminal 110 in the payment use process, and recognize or infer information (e.g., customer information, payment information, etc.) matching the received biometric feature data and verify same.

The card processing server 130 may be a server for perform processing related to card payment, and may, for example, generate, issue, and transmit payment information according to a request from the authentication server 120. As another example, the card processing server 130 may generate, issue, and transmit fixed token information according to a request from the authentication server 120. The payment information may be new identification information that is different from card information (e.g., a serial number of a physical card) and used to recognize a financial payment means such as a physical card, and may include a card identification (ID) which is a fixed identification number. The card processing server 130 may issue payment information in response to a request from the authentication server 120 in the registration process, and may verify the validity of the payment information received from the authentication server 120 in the payment use process. The fixed token information may be a fixed token value generated for payment, and may be generated based on the above-described payment information, and may be, for example, a random value generated by a predetermined rule. The card processing server 130 may issue the fixed token information to the authentication server 120 in the payment use process, and verify the validity of the fixed token information received from the affiliate server 140.

The affiliate server 140 may be a server for mediating in payment requested by a user. For example, the affiliate server 140 may be a value-added network (VAN) server and/or a payment gate (PG) server. The affiliate server 140 may receive the fixed token information for the payment from the terminal 110 or the authentication server 120, and request payment approval from the card processing server 130 using the fixed token information.

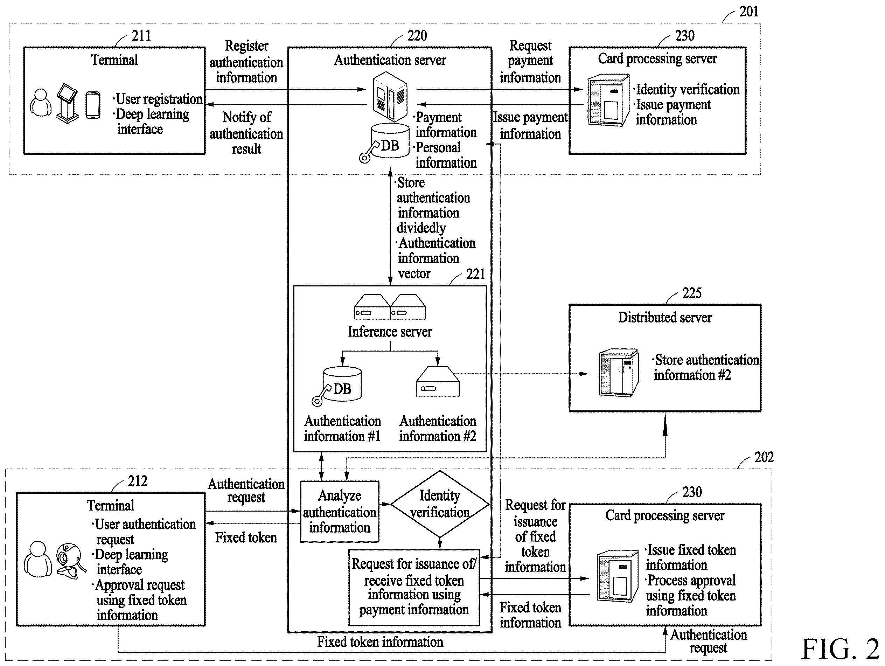

FIG. 2 is a diagram illustrating a general flow of a system for registration and payment using face information according to an example embodiment.

A system for registration and payment using face information according to an example embodiment may perform a registration process 201 and a payment use process 202.

In the registration process 201, a terminal 211 may acquire information (e.g., a face image) for user registration. The terminal 211 may request registration of authentication information using a two-dimensional image of a user face, acquired from a three-dimensional (3D) camera. As another example, the terminal 211 may further acquire a personal identification number (PIN) together with the face image. The terminal 211 may request registration of authentication information using the face image and the PIN.

An authentication server 220 may encrypt biometric feature data and store same in a distributed manner, in response to a request for registration of authentication information being received from the terminal 211. For example, the authentication server 220 may include a deep learning-based inference server 221 for generating biometric feature data for the face image received from the terminal 211. The inference server 211 may encrypt the generated biometric feature data as biometric authentication information. Further, the authentication server 220 may store the encrypted information in a distributed manner. The authentication server 220 may request payment information matching the biometric feature data from the card processing server 230 based on the biometric feature data. The authentication server 220 may receive payment information issued by the card processing server 230 as a result of identifying the user. The authentication server 220 may map authentication information together with personal information (e.g., the customer information) and/or the payment information and store same. As another example, the authentication server 220 may also map the PIN together with the personal information, the payment information, and the authentication information and store same. The authentication information may be in the form of a feature vector, for example. As shown in FIG. 2, the authentication server 220 may separate the biometric feature data into a plurality of pieces of authentication information (e.g., authentication information #1 and authentication information #2) and store same. For example, the authentication server 220 may store at least a portion of the plurality of pieces of authentication information (e.g., authentication information #2 in FIG. 2) in a distributed server 225. In addition, the biometric feature data may be encrypted and then, divided by a plurality of templates and stored. Biometric authentication information may be generated for each of the plurality of templates. For example, when there are n templates, n pieces of biometric authentication information may be generated from one piece of biometric feature data. Here, "n" may be an integer greater than or equal to "1". The authentication server 220 may store n pieces of biometric authentication information dividedly in n servers and/or storage spaces, or store a portion of the n pieces of biometric authentication information in the distributed server 225.

The card processing server 230 may receive a payment information request from the authentication server 220. The card processing server 230 may perform identity verification in response to the payment information request being received. The card processing server 230 may include a plurality of servers to which functions are distributed. In addition, the identity verification process may be performed by another external server, and the card processing server 230 may be notified of only the result. The card processing server 230 may issue payment information to the authentication server 220 in response to successful identity verification.

In the payment use process 202, the terminal 212 may transmit a user authentication request to the authentication server 220. For example, the terminal 212 may transmit a two-dimensional face image acquired from a 3D camera to the authentication server 220 and request user authentication for payment. As another example, the terminal 212 may request user authentication while transmitting not only the face image but also the PIN input by the user to the authentication server 220. The authentication server 220 may generate biometric feature data through the deep learning-based inference server 221 for the face image received from the terminal 211. As described above, in response to the verification that the authentication server 220 succeeds in the user authentication based on the biometric feature data, the terminal 212 may request and receive fixed token information from the authentication server 220. As another example, the authentication server 220 may request issuance of the fixed token information only when the PIN input in the payment process matches a PIN previously registered in the registration process, and the user authentication based on the biometric feature data is successful. The terminal 212 may request payment approval using the fixed token information.

The authentication server 220 may receive the two-dimensional image acquired from the 3D camera together with the user authentication request from the terminal 212. The inference server 221 in the authentication server 220 may analyze the two-dimensional image. The inference server 221 may extract deep learning-based biometric feature data from the two-dimensional image and return the result (e.g., the biometric feature data) to the authentication server 220. For example, the authentication server 220 may search for target authentication information matching the biometric feature data of the image received from the terminal 212, among previously encrypted and stored biometric authentication information. The authentication server 220 may determine whether previously stored biometric authentication information matches biometric feature data using a template corresponding to the previously stored biometric authentication information by comparing the previously stored biometric authentication information and the biometric feature data. For example, when the previously stored biometric authentication information is information in which encrypted biometric feature data is divided and stored for each of a plurality of templates, the authentication server 220 may receive a related portion of biometric authentication information from the distributed server 225 and generate combined biometric authentication information by combining the plurality of pieces of biometrics authentication information stored in the authentication server 220 and the distributed server 225. The authentication server 220 may calculate, from the combined biometric authentication information, partial data corresponding to the biometric feature data returned from the inference server 221, and compare the partial data and the biometric feature data to determine whether the partial data matches the biometric feature data. The authentication server 220 may identify an identity indicated by the biometric authentication information matching the biometric feature data as the identity of the input user. The authentication server 220 may use the identity of the user identified based on the biometric feature data to select customer information and payment information mapped thereto.

For reference, the authentication server 220 may identify an identity indicated by biometric authentication information for a user corresponding to biometric feature data, when the number of pieces of target authentication information matching the biometric feature data of the user to be authenticated, among a plurality of pieces of biometric authentication information corresponding to a same identity, is greater than or equal to a threshold number. When there are n templates and the threshold number is n, the input biometric feature data may need to match all biometric authentication information of the same identity for the authentication server 220 may identify the identity of the user corresponding to the biometric feature data. However, example embodiments are not limited thereto. When the threshold number is "1", the authentication server 220 may identify the identity of the user corresponding to the biometric feature data even when the biometric feature data matches one of the plurality of pieces of biometric authentication information of the same identity.

The authentication server 220 may further perform an identity verification procedure for the user of the identity identified by the above-described biometric feature data. The authentication server 220 may perform identity verification, and request issuance of fixed token information using payment information from the card processing server 230 in response to the verification that the user of the terminal 212 is the true owner. In response to the fixed token information being received from the card processing server 230, the authentication server 220 may transmit a payment approval request for an item (e.g., a product and/or a service) that the user desires to purchase through an affiliate server and the like. In this case, the authentication server 220 may transmit the payment approval request for the item that the user desires to purchase and the fixed token information to the affiliate server. However, example embodiments are not limited thereto, and the authentication server 220 may transmit the fixed token information to the terminal 212. In this case, the terminal 212 may directly transmit the payment approval request to the card processing server 230 using the fixed token information. The user may request payment for an item in an online store and/or an offline store.

The card processing server 230 may issue the fixed token information in response to the request from the authentication server 220. In this case, the card processing server 230 may receive customer information and payment information from the authentication server 220, and verify the validity of the customer information and the payment information. The card processing server 230 may generate the fixed token information using the payment information in response to the determination that the customer information and the payment information is valid. For reference, the fixed token information may be used once and may be changed at every payment approval request. Thereafter, the card processing server 230 may receive the payment approval request accompanying the fixed token information and price information of the item that the user desires to purchase from the terminal 212 and/or the affiliate server. The card processing server 230 may determine whether to approve the payment by verifying the validity of the fixed token information. The card processing server 230 may transmit a payment approval result to the terminal 212 and/or the affiliate server in response to the payment being approved.

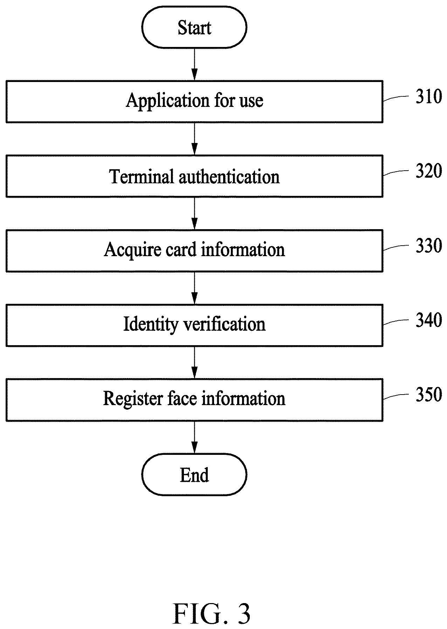

FIG. 3 is a flowchart illustrating a face information registration method according to an example embodiment.

First, in operation 310, a terminal may perform an application for use. For example, the terminal may request an agreement to terms of service required for face information registration. The terms of service may include, for example, agreement to collection and use of personal information, and agreement to the terms of service of an identity verification organization (e.g., the terms of use of an identity verification service, the terms of use of a telecommunication company service, the terms of use of a card company service, etc.). The terminal may continue payment service registration using face information in response to manipulation to agree to the terms of service being received from a user.

Then, in operation 320, the terminal may perform terminal authentication. For example, the terminal may receive a public key of a server certificate from an authentication center. The terminal may authenticate the authentication center, and then generate a one-time key, encrypt the generated one-time key using the server public key, and transmit same to a server. After the validity of the terminal is verified, the terminal may receive the key from the server.

Subsequently, in operation 330, the terminal may acquire card information. For example, the terminal may acquire code information indicating a financial payment means such as a card that the user desires to use from the user. For example, a dedicated terminal may acquire the card information based on one of an input of swiping a physical card, an input of inserting an integrated circuit (IC) unit of the physical card, and an input of a card serial number by the user. The input of swiping a physical card may indicate that the user magnetically swipes the physical card to a card recognition module of the dedicated terminal. The input of inserting the IC unit may indicate that the user inserts a portion including the IC unit of the physical card into the card recognition module of the dedicated terminal.

Then, in operation 340, the terminal may perform identity verification for a user to be registered. For example, the terminal may verify, through mobile phone identity verification, the name of the user, a telecommunications operator of a mobile phone, the number of the mobile phone, the date of birth of the user, the gender, and whether the user is a local or a foreigner. As another example, the terminal may primarily acquire the phone number and the numerals corresponding to a predetermined portion of the card serial number (e.g., the last eight digits of the card) through card identity verification, and verify whether the user is identified as the true owner of the mobile phone using at least a portion of a PIN (e.g., the first two or last two digits of the PIN) designated to the card through an authentication process such as ARS authentication or SMS authentication.

Subsequently, in operation 350, the terminal may register face information. For example, the terminal may transmit information related to the identity of a customer (e.g., CI information based on a name, a social security number, etc.) and the card information to a card processing server, and receive payment information (e.g., a card ID) generated based on the card information from the card processing server. The authentication server may map the customer information, the payment information, and biometric authentication information related to a face, and store same in a distributed manner.

For reference, a registration method according to an example embodiment may not provide a change of the payment information, the biometric authentication information, and the customer information mapped for the user. Accordingly, the user may delete previously registered information and proceed with re-registration. In addition, an administrator may delete information registered for a predetermined user, and the user may proceed with re-registration.

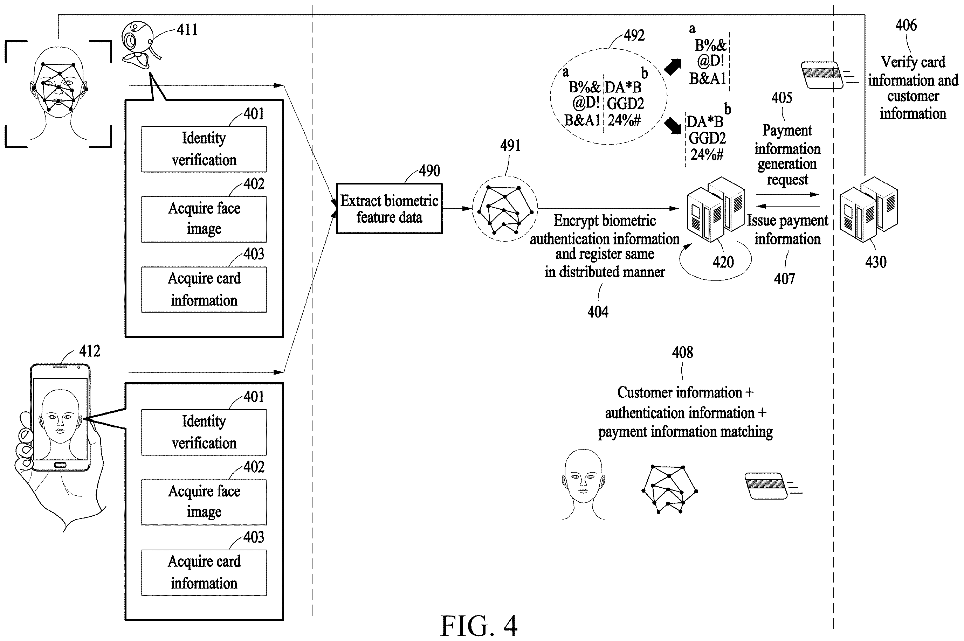

FIG. 4 is a diagram illustrating a detailed process of face information registration according to an example embodiment.

First, a terminal may be divided into a mobile terminal 412 that may be carried by a user and a dedicated terminal 411 installed in a store or the like. The dedicated terminal 411 may be implemented as a kiosk terminal including, for example, a 3D depth camera used for face payment.

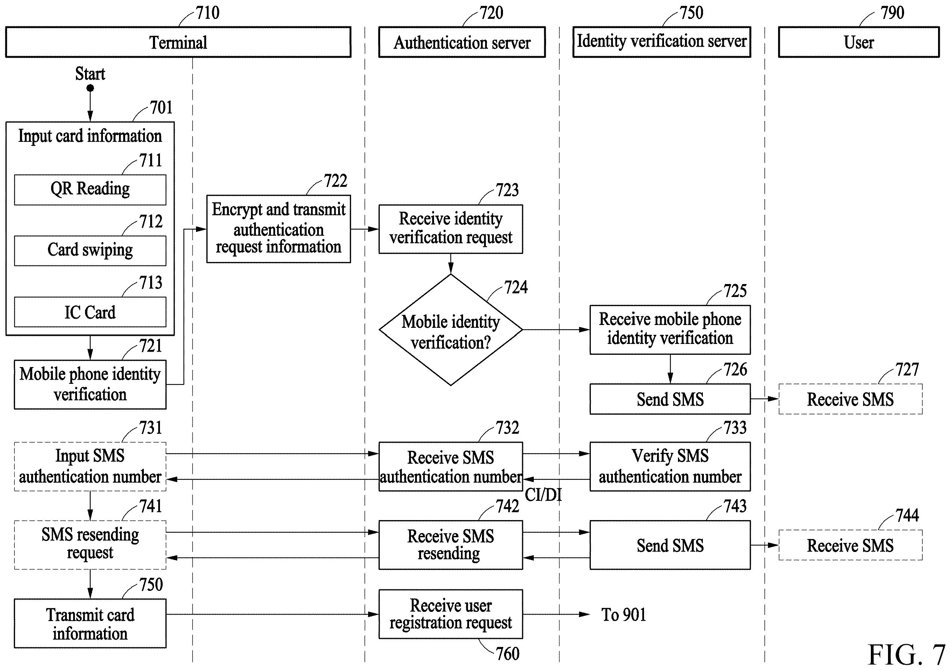

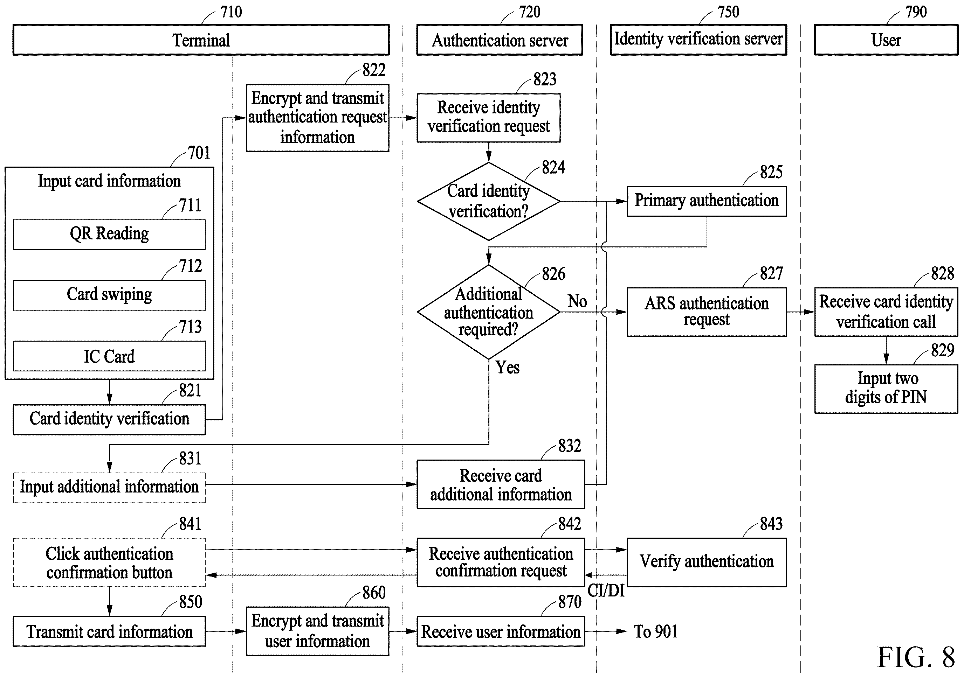

In operation 401, the dedicated terminal 411 may perform identity verification. The identity verification will be described below with reference to FIGS. 7 and 8. The dedicated terminal 411 may acquire customer information corresponding to a user through identity verification. As described above, the customer information may be information related to the identity of the user, and may include, for example, the name, the phone number, the social security number of the user, and the like.

Then, in operation 402, the dedicated terminal 411 may acquire a face image. The dedicated terminal 402 may acquire a two-dimensional face image after verifying that it is not a spoofed image using a three-dimensional camera. For example, the dedicated terminal 411 may acquire the two-dimensional face image by capturing the face of the user using a three-dimensional depth camera. The 3D depth camera may measure a distance from the camera to a target object, and a distance to each point on the target object may correspond to a depth. For example, the 3D depth camera may measure the distance based on a difference between a radiation point in time of a radiated signal (e.g., an infrared signal) and a reception point in time of a reflected signal through a time-of-flight scheme. Each pixel of a 3D face image may represent a depth value at a corresponding position. Further, the dedicated terminal 411 may verify the liveness of the face image through a stereo infrared ray sensor and a plurality of camera sensors. The liveness may indicate whether the biometrics of the user are authentic, and liveness verification may be, for example, an operation of verifying whether an object (e.g., a face) shown in the face image is a living body or not. The dedicated terminal 411 may verify the liveness of the face image, and terminate the face information registration procedure in response to the determination that the object shown in the face image is not a living body but a fake object.

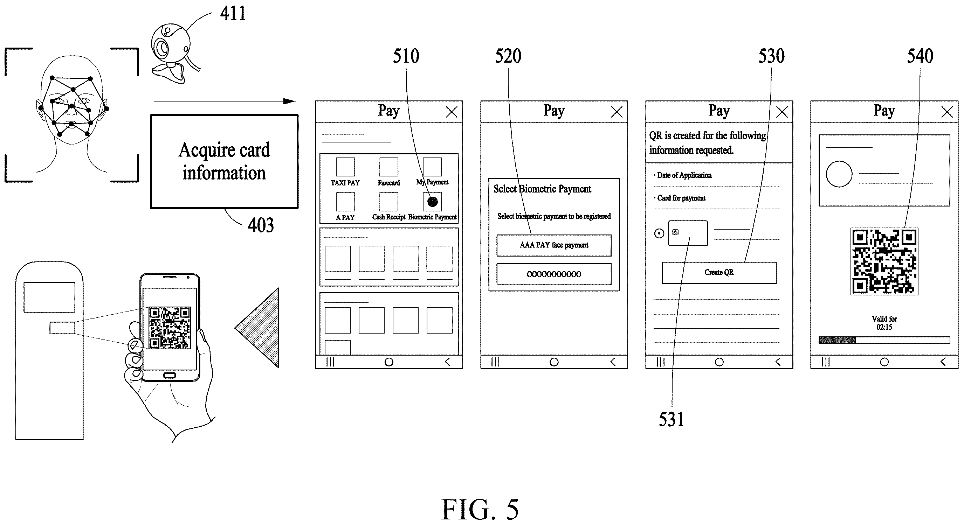

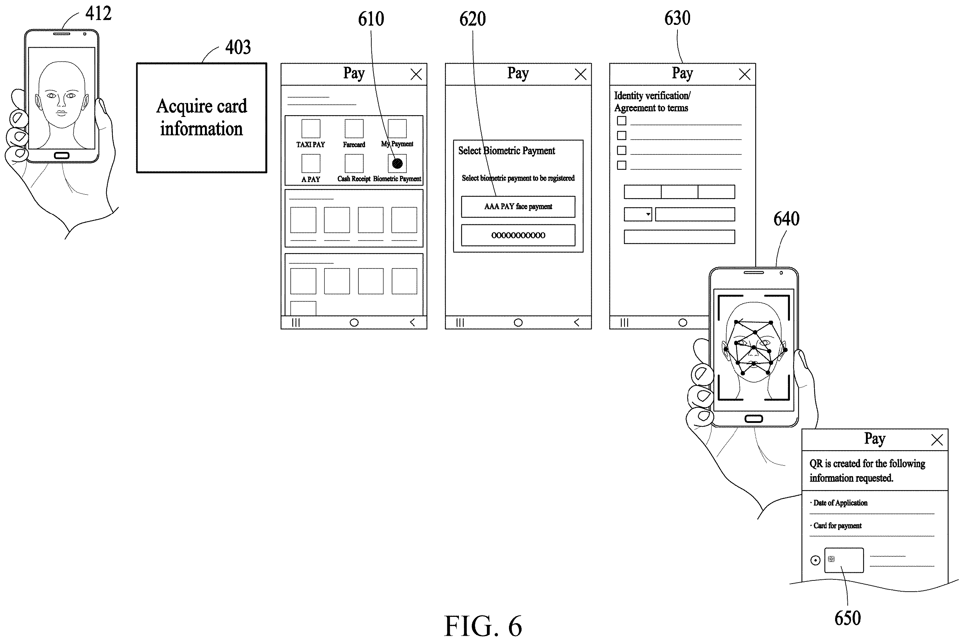

Subsequently, in operation 403, the dedicated terminal 411 may acquire card information of the user. The dedicated terminal 411 may acquire the card information through, for example, direct input, magnetic reading, and QR input. Acquiring the card information will be described below with reference to FIGS. 5 and 6.

Although the operation of the dedicated terminal 411 is mainly described, the mobile terminal 412 may also perform operations 401, 402, and 403 described above. For reference, in operation 402, the dedicated terminal 411 acquires a face image through a 3D camera, but the mobile terminal 412 may acquire a face image through a two-dimensional (2D) camera. However, example embodiments are not limited thereto. When the mobile terminal 412 includes a 3D depth camera, the mobile terminal 412 may also acquire the face image through the 3D camera.

According to an example embodiment, the dedicated terminal 411 and/or the mobile terminal 412 may request user registration while mapping the customer information, the face image, and the card information and transmitting same to an authentication server 420.

Then, in operation 490, the authentication server 420 may extract biometric feature data 491 from a face image received from the mobile terminal 412 and/or the dedicated terminal 411 using a trained deep learning model.

Subsequently, in operation 404, the authentication server 420 may encrypt biometric authentication information and register same in a distributed manner. For example, the authentication server 420 may generate encrypted biometric information 492 by encrypting the biometric feature data 491. The authentication server 420 may register the biometric authentication information generated by distributing the encrypted biometric information 492. For reference, biometric feature data 491 extracted from a face image acquired by the mobile terminal 412 and biometric feature data 491 extracted from a face image acquired by the dedicated terminal 411 may be compatible with each other. The authentication server 420 may generate a plurality of pieces of biometric authentication information by separating the encrypted biometric information 492 by a plurality of templates. For example, in FIG. 4, biometric authentication information a and biometric authentication information b may be generated. The authentication server 420 may store the biometric authentication information by distributing same to at least one distributed server. The authentication server 420 and the distributed server may be operated by different business entities or data centers.

Subsequently, in operation 405, the authentication server 420 may transmit a payment information generation request to the card processing server 430. In this case, the authentication server 420 may further provide the card information received from the terminal 411, 412 to the card processing server 430. The card processing server 430 may receive the payment information generation request from the authentication server 420. Here, the authentication server 420 may be a server that stores at least one of a plurality of pieces of biometric authentication information in which the biometric feature data 491 related to the face of the user is encrypted and stored in a distributed manner. The authentication server 420 may further receive the card information along with the request described above.

Then, in operation 406, the card processing server 430 may verify the card information and the customer information. According to an example embodiment, the card processing server 430 may verify the card information and the customer information on the terminal, in response to the payment information generation request being received. For example, the card processing server 430 may verify the validity of the card information and the validity of the customer information. The card processing server 430 may verify the validity of the card information based on whether the serial number of the card information meets a predetermined rule, whether the expiration date of a physical card passes, whether the PIN input by the user matches the PIN designated to the card, and the like. Further, the card processing server 430 may verify the validity of the customer information through whether connecting information (CI) received from the outside matches CI previously designated for the customer information.

Subsequently, in operation 407, the card processing server 430 may issue payment information in response to successful verification of the card information and the customer information. For example, the card processing server 430 may generate the payment information based on the card information, in response to successful verification of the card information. As described above, the payment information may be a value different from the card information, and may be an identification number (e.g., card ID) indicating the physical card. The card processing server 430 may issue the generated payment information to the authentication server 420 to store same together with the biometric authentication information.

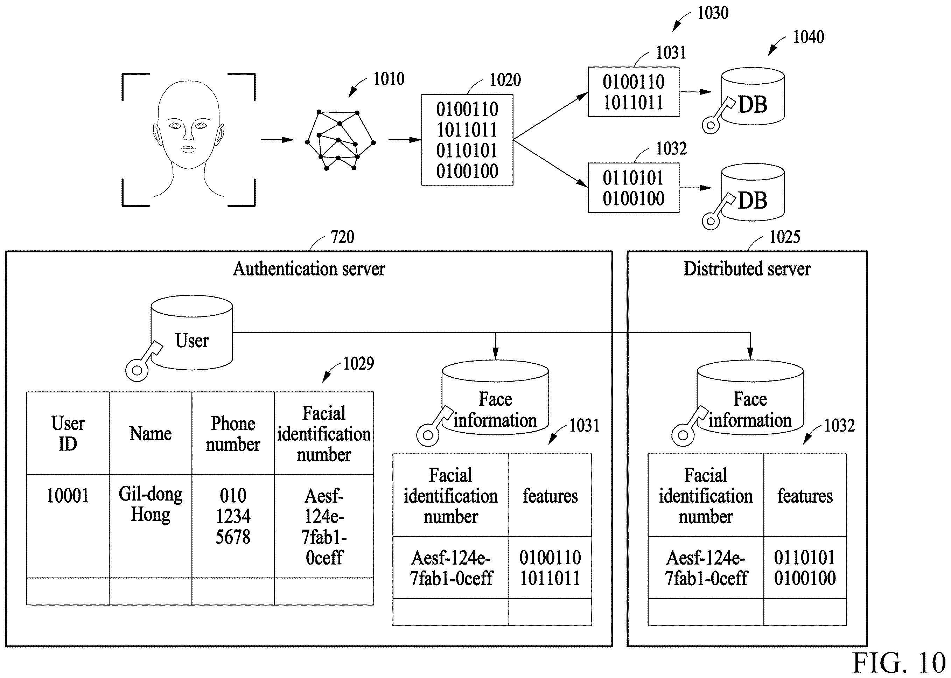

Then, in operation 408, the authentication server 420 may match and store the customer information, the authentication information, and the payment information. Matching and storing will described below with reference to FIG. 10.

Thereafter, the dedicated terminal 411 and/or the mobile terminal 412 may receive a registration result from the authentication server 420, in response to successful registration of the customer information, the biometric feature data 491 extracted for the face image, and the card information in the authentication server 420. The dedicated terminal 411 and/or the mobile terminal 412 may output the received registration result through a display.

FIGS. 5 and 6 are diagrams illustrating an example of acquiring card information in face information registration according to an example embodiment.

In FIG. 5, the dedicated terminal 411 may acquire card information through code information. For example, the dedicated terminal 411 may optically acquire two-dimensional code information indicating card information selected based on a user input. A mobile terminal different from the dedicated terminal 411 may select one of pieces of card information stored in the mobile terminal based on a user input. For example, as shown in FIG. 5, the mobile terminal may provide an interface for selecting a bio-payment method in response to an input of selecting "bio payment" 510. In response to a face payment method 520 being selected in the interface, the mobile terminal may provide a card information selection interface. The mobile terminal may select predetermined card information 531 by a user input in the interface. In response to a code visualization input 530 for the selected card information 531, the mobile terminal may visualize code information 540 indicating the selected card information 531 through a display. Here, the code information may be, for example, two-dimensional code information, and may include a barcode and a quick response (QR) code. The dedicated terminal 411 may recognize the code information displayed on the display of the mobile terminal through an optical sensor. The dedicated terminal 411 may map the selected card information and a face image acquired through a 3D camera, based on the 2D code information acquired using optical recognition.

In FIG. 6, the mobile terminal may acquire a user input of selecting one of one or more pieces of card information stored in a user terminal. For example, the mobile terminal may provide an interface for selecting a bio-payment method in response to an input of selecting "bio payment" 610. In response to a face payment method 620 being selected in the interface, the mobile terminal may provide an identity verification interface 630 for performing an identity verification procedure. The mobile terminal may acquire a face image 640 in response to successful identity verification. After acquiring the face image 640, the mobile terminal may provide a card information selection interface. The mobile terminal may select one piece of card information 650 in response to a user input in the card information selection interface. The mobile terminal may transmit the selected card information 650 and customer information to an authentication server in response to a user input, and separately transmit a two-dimensional image for extracting biometric feature data to the authentication server. Accordingly, the mobile terminal may transmit the card information 650 and the customer information, and the two-dimensional image to a server dividedly in two steps.

FIGS. 7 and 8 are diagrams illustrating an identity verification process in face information registration according to an example embodiment.

First, in operation 701, a terminal 710 may receive card information. For example, as in operation 711, the terminal 710 may acquire QR information indicating a card displayed on another device through optical recognition. As another example, as in operation 712, the terminal 710 may acquire card information related to a card serial number through card swiping. As still another example, as in operation 713, the terminal 710 may acquire card information through insertion of an IC unit of a card.

Then, in operation 721, the terminal 710 may initiate a mobile phone identity verification procedure. For example, in operation 722, the terminal 710 may encrypt information related to identity verification and an authentication request and transmit same to an authentication server 720.

Subsequently, in operation 723, the authentication server 720 may receive an identity verification request from the terminal 710. In operation 724, the authentication server 720 may check whether to initiate a mobile phone identity verification procedure.

In operation 725, an identity verification server 750 may receive mobile phone identity verification from the authentication server 720. In operation 726, the identity verification server 750 may send an SMS to the corresponding terminal 710 (e.g., the mobile terminal 710). Here, the SMS may be a message including a one-time number for authentication (e.g., an SMS authentication number). A user 790 may receive the SMS through the terminal 710, in operation 727.

In operation 731, the terminal 710 may receive an SMS authentication number from the user 790. In operation 732, the authentication server 720 may receive the SMS authentication number and transmit same to the identity verification server 750. In operation 733, the identity verification server 750 may verify whether the SMS authentication number sent to the user 790 matches the SMS authentication number received via the authentication server 720.

In operation 741, in response to a mismatch between the SMS authentication numbers, the terminal 710 may transmit an SMS resending request. In operation 742, the authentication server 720 may receive the SMS resending request and transmit same to the authentication server 720. The authentication server 720 may send an SMS again in operation 743, and the user 790 may receive the SMS in operation 744.

In operation 750, in response to successful identity verification, the terminal 710 may transmit a user 790 register request while transmitting the card information and CI acquired as described above to the authentication server 720.

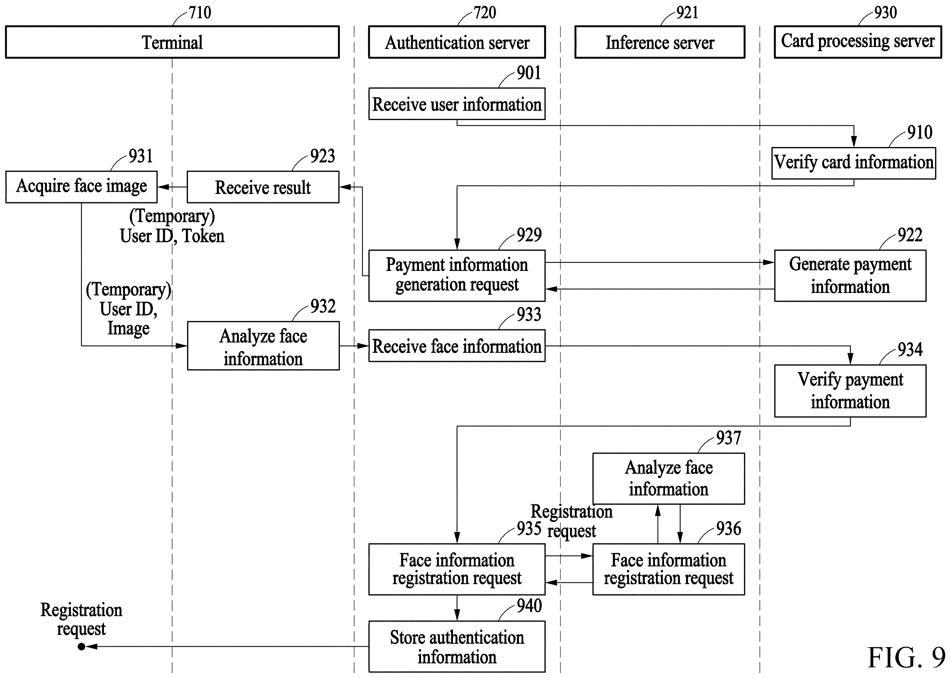

In operation 760, the authentication server 720 may receive the user 790 registration request. Thereafter, the authentication server 720 may perform an operation corresponding to operation 901 of FIG. 9.

An identity verification procedure through a card will be described with reference to FIG. 8. Operations 701, 711, 712, and 713 have been described above, and thus the description thereof is omitted.

In operation 821, in response to a card identity verification procedure being selected, the terminal 710 may initiate the procedure. In operation 822, the terminal 710 may encrypt the information related to authentication and the authentication request and transmit same to the authentication server 720.

In operation 823, the authentication server 720 may receive an identity verification request. In operation 824, the authentication server 720 may determine whether the card identity verification procedure has been initiated, and in operation 825, the identity verification server 750 may perform primary authentication (e.g., verification of whether a serial number of the card and a PIN being input match previously stored values). In operation 826, the authentication server 720 may determine whether additional authentication is required. In operation 827, in response to additional authentication not being required, the identity verification server 750 may transmit an ARS authentication request. In operation 828, the user 790 may receive a call for card identity verification. In operation 829, the user 790 may input a portion (e.g., 2 digits) of the PIN of the card through an ARS.

In operation 831, in response to additional authentication being required, the terminal 710 may receive additional information from the user 790. In operation 832, the authentication server 720 may receive additional card information from the terminal 710 and transmit same to the identity verification server 750, such that the procedure may be performed again starting from operation 825.

In operation 841, the terminal 710 may receive a user input of clicking an authentication confirmation button, and in operation 842, the authentication server 720 may receive an authentication confirmation request from the terminal 710. In operation 843, the identity verification server 750 may verify whether authentication is complete in response to the authentication confirmation request transmitted from the authentication server 720, and notify the authentication server 720 of the result.

In operation 850, the terminal 710 may transmit the card information in response to successful identity verification. Here, as in operation 860, the terminal 710 may encrypt user 790 information (e.g., customer information) and map and transmit same together with card information.

In operation 870, the authentication server 720 may receive the user 790 information and the like, and subsequently, perform operation 901 of FIG. 9.

FIG. 9 is a diagram illustrating a process of storing biometric authentication information in face information registration according to an example embodiment.

First, in operation 901, the authentication server 720 may receive user information (e.g., customer information), biometric feature data, and card information through the processes of FIGS. 7 and 8 above.

Then, in operation 910, a card processing server 930 may verify the card information. For example, the card processing server 930 may verify the validity of the card information. The card processing server 930 may verify whether a card serial number of the card information is valid, whether the expiration date of a card indicated by the card information passes, and the like. Subsequently, in operation 929, the authentication server 720 may transmit a payment information generation request to the card processing server 930. For example, in operation 922, the card processing server 930 may receive the payment information generation request including the customer information and the card information from the authentication server 720. Here, the card processing server 930 may verify the card information associated with the payment information generation request. The card processing server 930 may verify whether the card indicated by the card information is valid. Further, the card processing server 930 may verify the validity of the customer information together with the card information. For reference, the card processing server 930 may verify whether the customer information is legitimate using CI. For example, the card processing server 930 may verify the validity of the customer information through whether CI received from the outside matches CI previously designated for the customer information. The card processing server 930 may generate payment information in response to successful verification of the customer information together with the card information. The card processing server 930 may generate a new card identification number that is different from the card information (e.g., an actual card serial number of a physical card) as the payment information. The card processing server 930 may issue the payment information to the authentication server 720 to store same together with biometric authentication information and the customer information.

Then, in operation 923, in response to the payment information being successfully issued by the card processing server 930, the terminal 710 may receive the result. For example, the terminal 710 may receive the payment information and a temporary user identifier.

Then, in operation 931, the terminal 710 may acquire a face image of the user through a 3D camera. The terminal 710 may map the acquired face image and the temporary user information and transmit same to the authentication server 720.

Then, in operation 933, the authentication server 720 may receive face information. For example, the authentication server 720 may receive the face image information and the temporary user information. In operation 934, the card processing server 930 may verify the payment information. The card processing server 930 may verify the validity of the payment information. For example, the card processing server 930 may verify whether the new card identification number included in the payment information meets a predetermined rule, and the like. The authentication server 720 may verify the presence or absence of the payment information. In operation 935, in response to the presence or absence of the payment information being verified, the authentication server 720 may transmit the face image to an inference server 921. For reference, the inference server 921 may be implemented inside the authentication server 720, but is not limited thereto, and may alternatively be built as a separate server. In operation 936, the inference server 921 may receive the face image from the authentication server 720. In operation 937, the inference server 921 may analyze the face information.

Thereafter, in operation 940, the authentication server 720 may generate biometric authentication information in which face feature data is encrypted and distributed, and store the biometric authentication information dividedly in a plurality of servers. Storing biometric authentication information in a distributed manner will be described below with reference to FIG. 10.

FIG. 10 is a diagram illustrating an example of storing biometric authentication information in a distributed manner in face information registration according to an example embodiment.

As described above, biometric feature data 1010 may be extracted from a face image, and the authentication server 720 may generate encrypted biometric information 1020 by encrypting the extracted biometric feature data 1010. The authentication server 720 may generate distributed biometric authentication information 1030 by separating the encrypted biometric information 1020 by a plurality of templates. For example, in FIG. 10, the authentication server 720 may generate first authentication information 1031 and second authentication information 1032 as the biometric authentication information 1030. The authentication server 720 may store the first authentication information 1031 and the second authentication information 1032 respectively in a plurality of databases 1040. The plurality of databases 1040 may be included in the same server, but are not limited thereto, and may be stored in a distributed manner in separate servers that are physically different. A separate distributed server 1025 may be a server that is operated by an operator different from an operator of the authentication server 720.

For example, a plurality of pieces of distributed biometric authentication information may be mapped with a facial identification number representing a same user, and may be stored in a distributed manner in the authentication server 720 and at least one distributed server 1025. The authentication server 720 may map a facial identification number 1029 to customer information (e.g., a user ID, a name, a phone number) and/or payment information and store same in a user table. The facial identification number 1029 may be an identification number indicating a face of a predetermined user, and the authentication server 720 may designate the same facial identification number 1029 for the pieces of biometric authentication information 1030 that are extracted from a face image of the same user, encrypted, and distributed. The authentication server 720 may map the facial identification number 1029 and the first authentication information 1031 and store same in a face information database. The distributed server 1025 that is different from the authentication server 720 may map the same facial identification number 1029 and the second authentication information 1032 and store same in the face information database. Further, although not shown in FIG. 10, the distributed server 1025 may map the payment information together with the customer information and the biometric authentication information 1030 and store same. The distributed server 1025 may include a plurality of servers.

However, mapping the data is not limited thereto, and may vary according to a design.

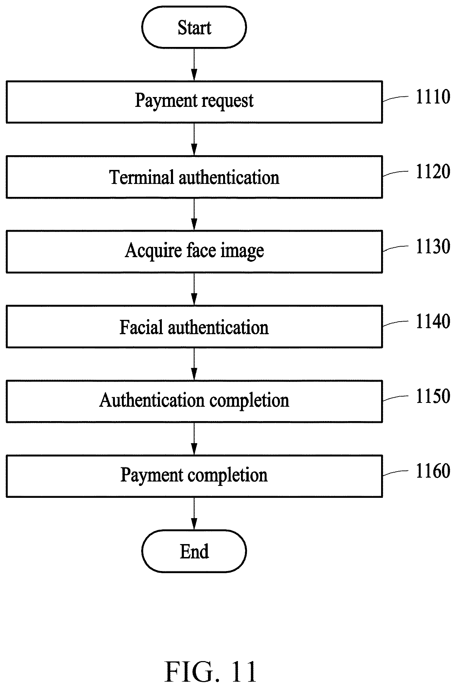

FIG. 11 is a flowchart illustrating a payment method using face information according to an example embodiment.

First, in operation 1110, a terminal may perform a payment request. For example, a dedicated terminal and/or a mobile terminal may proceed with a payment request based on face payment, in response to a face payment event being selected by a user.

Then, in operation 1120, the terminal may request terminal authentication. For example, the terminal may receive a public key of a server certificate. After authentication by a certificate authority (CA), the terminal may generate a one-time key and transmit same to a server. After the validity of the terminal is verified, the server may receive the key.

Subsequently, in operation 1130, the terminal may acquire a face image. For example, the dedicated terminal may capture a face image of a customer using a 3D depth camera. However, example embodiments are not limited thereto, and the mobile terminal may capture a face image using a typical camera. The terminal may verify the liveness and then, transmit the face image to an authentication server.

Then, in operation 1140, the authentication server may perform facial authentication. An inference server may extract biometric feature data based on the face image and return a result (e.g., the biometric feature data described above) to the authentication server. The authentication server may search for biometric authentication information matching the biometric feature data, and identify customer information and payment information mapped to the found biometric authentication information. For example, the authentication server may determine whether combined biometric authentication information generated by combining the pieces of biometric authentication information stored in the distributed server matches the biometric feature data by comparing the combined biometric authentication information and the biometric feature data. The authentication server may calculate a matching similarity between the biometric feature data and the combined biometric authentication information, and determine that the biometric feature data matches the combined biometric authentication information in response to the matching similarity exceeding a threshold similarity.

The authentication server may request fixed token information (e.g., a one-time number (OTN)) from a card processing server using payment information (e.g., a card ID) of the user corresponding to the identified customer information. The card processing server may issue fixed token information to the authentication server through a separate verification procedure.

Subsequently, in operation 1150, the terminal may receive a result related to authentication completion (e.g., a facial authentication result, etc.). For example, in response to successful user authentication in the operations described above, the authentication server and/or the card processing server may transmit the fixed token information to the terminal having requested payment.

Then, in operation 1160, the terminal may perform payment completion based on the result of authentication completion. The terminal and/or the authentication server may request payment for the above-described fixed token information from an affiliate server, and the fixed token information may be transmitted to the card processing server through the affiliate server. In response to final payment being approved by the card processing server, the terminal may receive a payment approval result.

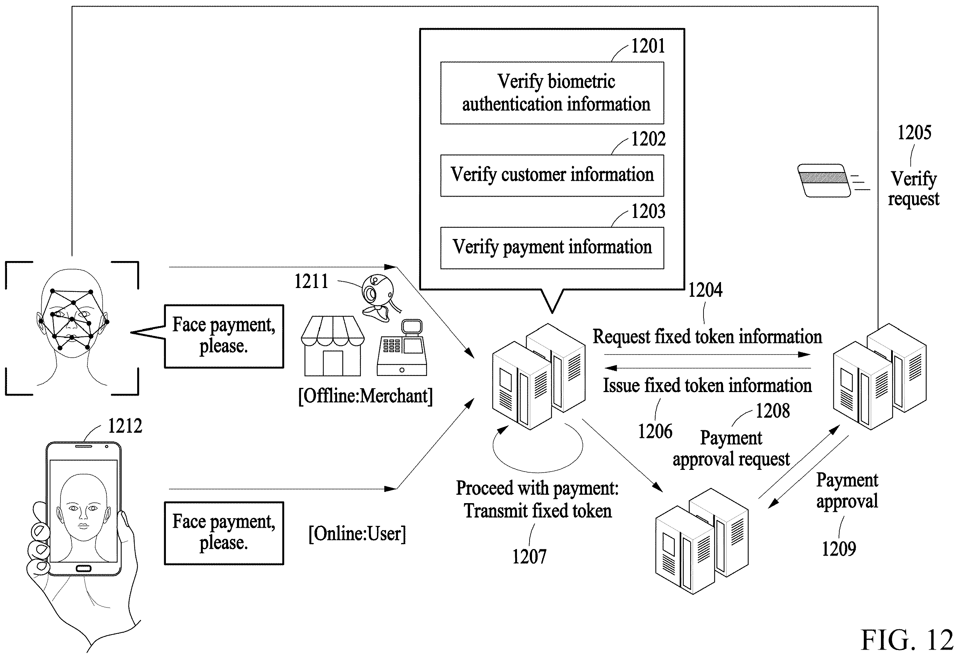

FIG. 12 is a diagram illustrating a detailed process of payment using face information according to an example embodiment.

First, a terminal may acquire a face image from a user in response to face payment being selected by the user. The terminal may be a dedicated terminal 1211 and/or a mobile terminal 1212. For example, the terminal may calculate price information for an item picked up for purchase by the user, from at least one of a service and a product. The terminal may select the face payment as a payment method for the calculated price information in response to a user input.

Thereafter, the terminal may request face payment while transmitting the face image acquired through a camera to a server.

For reference, FIG. 12 illustrates that the dedicated terminal 1211 performs face payment through a merchant offline and the mobile terminal 1212 performs face payment online, but example embodiments are not limited thereto. The dedicated terminal 1211 may perform face payment online, and the mobile terminal 1212 may perform face payment through a merchant offline. In addition, face information may be registered online, and face payment may be performed offline. Conversely, face information may be registered through the dedicated terminal 1211 offline, and face payment may be performed through the mobile terminal 1212 online. Accordingly, it may be used interchangeably online and offline.

Then, in operation 1201, an authentication server may verify biometric authentication information. For example, the authentication server may determine whether biometric authentication information (hereinafter, target authentication information) matching the biometric feature data is present among previously stored biometric authentication information. Accordingly, the authentication server may search for target authentication information matching the biometric feature data received from the terminal from among the plurality of pieces of biometric authentication information stored in a distributed manner.

Subsequently, the authentication server may identify at least one of customer information and payment information of a user corresponding to the matching biometric authentication information, through a user table in which a facial identification number mapped to the matching biometric authentication information is stored. For example, in operation 1202, the authentication server may verify customer information. For example, the authentication server may identify customer information mapped to the found target authentication information. In the data structure shown in FIG. 10 as an example, the authentication server may search for target authentication information matching the biometric feature data in operation 1201 described above, and identify a facial identification number of the found target authentication information. The authentication server may search for customer information corresponding to the identified facial identification number. Further, in operation 1203, the authentication server may verify payment information. For example, the authentication server may identify payment information mapped to the identified customer information or the like. As described above, the payment information may be information that is generated from card information indicating a physical card or an app card and used to generate fixed token information.

Then, in operation 1204, the authentication server may request fixed token information. The authentication server may request the fixed token information from a card processing server using the payment information and the customer information corresponding to the matching biometric authentication information. For example, the authentication server may transmit the payment information together to the card processing server while requesting the fixed token information. The card processing server may receive a generation request for fixed token information from the authentication server that stores at least one of a plurality of pieces of biometric authentication information in which biometric feature data related to a face of a user is encrypted and stored in a distributed manner. Further, the card processing server may also receive, from the authentication server, payment information identified based on biometric feature data extracted from a face image input by the user.

Then, in operation 1205, the card processing server may verify the request. For example, the card processing server may verify the validity of the payment information. In response to the verification that the generation request for the fixed token information is valid, the card processing server may generate fixed token information in response to the generation request. For example, the card processing server may generate a random number as the fixed token information using payment information as, for example, a seed value.

Then, in operation 1206, the card processing server may issue the fixed token information. For example, the card processing server may transmit the generated fixed token information to the authentication server.

Subsequently, in operation 1207, the authentication server may transmit the fixed token to an affiliate server. However, example embodiments are not limited thereto, and the authentication server may transmit the fixed token to the terminal, and the terminal may transmit the fixed token information to the affiliate server. Alternatively, the terminal and/or the authentication server may transmit the fixed token information for face payment of an item to be purchase directly to the card processing server, not through the affiliate server.

Then, in operation 1208, the affiliate server may transmit a payment approval request to the card processing server. The card processing server may verify the fixed token information, in response a payment request by the terminal together with the fixed token information being received. For reference, the payment request by the terminal may be transmitted through the affiliate server as shown in FIG. 12, but example embodiments are not limited thereto. The payment request by the terminal may be transmitted from the terminal directly to the card processing server.

Subsequently, in operation 1209, the card processing server may transmit a payment approval to the affiliate server. For example, the card processing server may provide information related to the payment approval based on a result of verifying the fixed token information. Although FIG. 12 illustrates the information related to the payment approval being provided to the affiliate server, example embodiments are not limited thereto. The card processing server may provide the information related to the payment approval directly to the terminal. The terminal may receive a result of processing the face payment based on the payment information and the customer information identified by the biometric feature data through the affiliate server and the authentication server or directly from the card processing server. The information related to the payment approval may be information indicating whether the face payment is approved, or a result of processing the face payment.

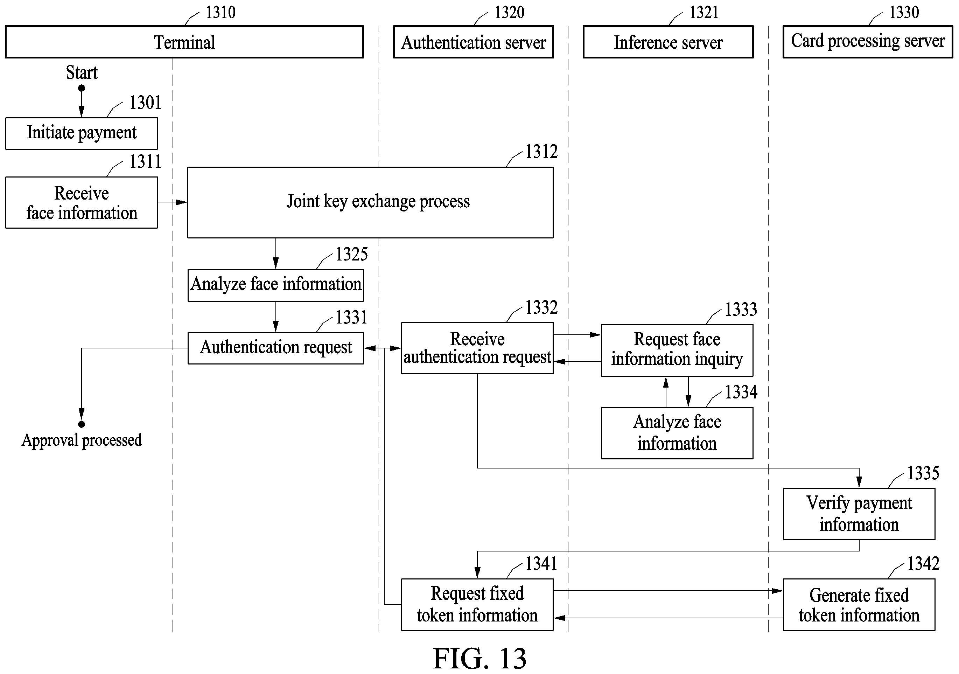

FIG. 13 is a diagram illustrating a process of generating fixed token information in payment using face information according to an example embodiment.

First, in operation 1301, a terminal 1310 may initiate payment. For example, the terminal 1310 may select a face payment event for an item of a product and/or a service desired to be purchased in response to a user input.

Then, in operation 1311, the terminal 1310 may receive face information. For example, the terminal 1310 may capture a face image of a user. Subsequently, in operation 1312, the terminal 1310 and an authentication server 1320 may jointly perform a key exchange process. Then, in operation 1325, the terminal 1310 may acquire the face image after verifying that the image captured by a 3D camera is not spoofed.

Subsequently, in operation 1331, the terminal 1310 may transmit an authentication request. For example, the terminal 1310 may transmit a facial authentication request while transmitting the face image to the authentication server 1320. Then, in operation 1332, the authentication server 1320 may receive the facial authentication request including the face image from the terminal 1310. Subsequently, in operation 1333, an inference server 1321 of the authentication server 1320 may analyze and extract biometric feature data from the received face image, and return a result (e.g., the biometric feature data). When there is a distributed server, the authentication server 1321 may search for target authentication information matching combined biometric authentication information generated by combining biometric authentication information stored in a distributed manner with biometric authentication information in the distributed server. The authentication server 1320 may identify customer information and payment information corresponding to the target authentication information, in response to the target authentication information being found.

Then, in operation 1335, a card processing server 1330 may verify the identified payment information based on the biometric feature data. For example, the card processing server 1330 may verify the validity of the payment information. The authentication server 1320 may verify only the presence or absence of payment information verification information.

Subsequently, in operation 1341, the authentication server 1320 may request fixed token information. Then, in operation 1342, the card processing server 1330 may generate fixed token information. For example, the card processing server 1330 may receive the customer information and the payment information along with a generation request for the fixed token information from the authentication server 1320, and generate the fixed token information in response to the determination that the customer information and the payment information is valid. Thereafter, the authentication server 1320 may receive the fixed token information issued by the card processing server 1330 according to a result of verifying the user based on the customer information and the payment information. The authentication server 1320 may transmit a facial authentication result of the user to the terminal. The facial authentication result may include the fixed token information.

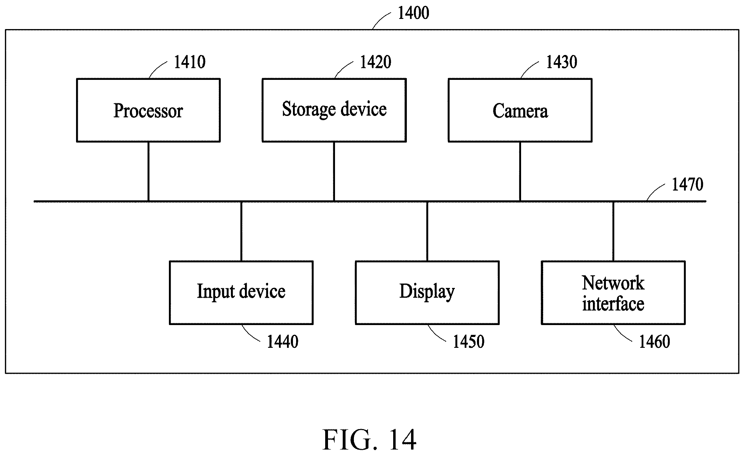

FIG. 14 is a block diagram illustrating a configuration of a terminal according to an embodiment.

Referring to FIG. 14, a terminal 1400 may include a processor 1410, a storage device 1420, a camera 1430, an input device 1440, a display 1450, and a network interface 1460. The processor 1410, the storage device 1420, the camera 1430, the input device 1440, the display 1450, and the network interface 1460 may communicate with each other through a communication bus 1470. The dedicated terminal and/or the mobile terminal described with reference to FIGS. 1 to 13 may be implemented as the terminal 1400 shown in FIG. 14.

The processor 1410 may execute instructions and functions to be executed in the terminal 1400. For example, the processor 1410 may process the instructions stored in the storage device 1420. The processor 1410 may perform the one or more operations described through FIGS. 1 to 13.

The storage device 1420 stores information or data necessary for the execution of the processor 1410. The storage device 1420 may include a computer-readable storage medium or a computer-readable storage device. The storage device 1420 may store instructions to be executed by the processor 1410 and may store related information while software and/or an application is executed by the terminal 1400.

The camera 1430 may capture an image. For example, the camera 1430 may capture and generate a face image of a user. The camera 1430 may be a color sensor, but is not limited thereto, and may be a 3D depth sensor.

The input device 1440 may receive an input from a user through a haptic, video, audio, or touch input. The input device 1440 may include a keyboard, a mouse, a touch screen, a microphone, or any other device that detects the input from the user and transmits the detected input.

The display 1450 may provide an output of the terminal 1400 to the user through a visual channel. For example, the display 1450 may provide a payment approval result to the user using visual information.

The network interface 1460 may communicate with an external device through a wired or wireless network. The network interface 1460 may transmit/receive data and requests related to face payment. The network interface 1460 may also be referred to as a communicator.

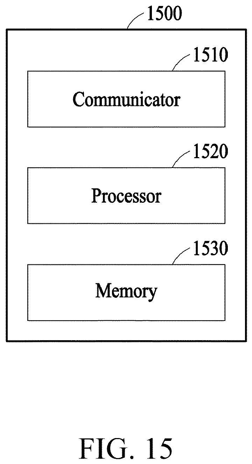

FIG. 15 is a block diagram illustrating a configuration of a server according to an embodiment.

A server 1500 may include a communicator 1510, a processor 1520, and a memory 1530. At least one of the authentication server, the affiliate server, and the card processing server described with reference to FIGS. 1 to 13 may be implemented as the server 1500 shown in FIG. 15.

The communicator 1510 may communicate with an external server and/or a terminal through a wired or wireless network. The communicator 1510 may transmit and receive data (e.g., payment information, customer information, a face image, fixed token information, and the like) related to face payment and various requests.

The memory 1530 stores information or data necessary for the execution of the processor 1520. The memory 1530 may include a computer-readable storage medium or a computer-readable storage device. The memory 1530 may store instructions to be executed by the processor 1520, and store related information while software or an application is being executed by the server 1500.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described example embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A face information registration method performed by a terminal, the face information registration method comprising:
acquiring customer information corresponding to a user;
acquiring a face image of the user;
acquiring card information of the user;
requesting user registration while mapping the customer information, the face image, and the card information and transmitting same to an authentication server; and
in response to successful registration of the customer information, biometric feature data extracted for the face image, and the card information in the authentication server, receiving a result of the registration from the authentication server.

2. The face information registration method of claim 1, wherein the acquiring of the face image comprises acquiring a two-dimensional face image after verifying that it is not a spoofed image using a three-dimensional depth camera.

3. The face information registration method of claim 1, wherein the acquiring of the face image comprises verifying a liveness of the face image through a stereo infrared ray sensor and a plurality of camera sensors.

4. The face information registration method of claim 1, wherein the acquiring of the card information comprises acquiring the card information based on one of an input of swiping a physical card, an input of inserting an integrated circuit (IC) unit of the physical card, and an input of a card serial number by the user.

5. The face information registration method of claim 1, wherein the requesting of the user registration comprises:
acquiring a user input of selecting one of pieces of card information stored in a user terminal; and
transmitting the card information selected in response to the user input and the customer information to the authentication server, and separately transmitting a two-dimensional image for extracting the biometric feature data to the authentication server.

6. The face information registration method of claim 1, wherein the requesting of the user registration comprises:
optically acquiring two-dimensional code information indicating card information selected based on a user input; and
mapping the selected card information and the face image based on the two-dimensional code information.

7. A face information registration method performed by a server, the face information registration method comprising:
receiving a payment information generation request from an authentication server that stores at least one of a plurality of pieces of biometric authentication information in which biometric feature data related to a face of a user is encrypted and stored in a distributed manner;
verifying card information of a terminal in response to the payment information generation request being received;
generating payment information based on the card information in response to the successful verification of the card information; and
issuing the generated payment information to the authentication server to store same together with the biometric authentication information.

8. The face information registration method of claim 7, wherein the verifying of the card information comprises verifying the customer information together with the card information,
the generating of the payment information comprises generating the payment information in response to the successful verification of the customer information together with the card information, and
the issuing of the payment information to the authentication server comprises issuing the payment information to the authentication server to store same together with the biometric authentication information and the customer information.

9. The face information registration method of claim 8, wherein the verifying of the customer information comprises verifying whether the customer information is legitimate using connecting information (CI).

10. The face information registration method of claim 7, wherein the verifying of the card information comprises verifying whether a card indicated by the card information is valid.

11. The face information registration method of claim 7, wherein the generating of the payment information comprises generating a card identification number different from the card information as the payment information.

12. A payment method using face information performed by a terminal, the payment method comprising:
acquiring a face image from a user in response to face payment being selected by the user;
requesting the face payment while transmitting the face image to an authentication server; and
receiving a result of processing the face payment based on payment information and customer information identified by biometric feature data extracted from the face image.

13. The payment method of claim 12, wherein the payment information is information generated from card information indicating a physical card and used to generate fixed token information.

14. The payment method of claim 12, further comprising:
calculating price information for an item picked up for purchase by the user, from at least one of a service and a product; and
selecting the face payment as a payment method for the calculated price information in response to a user input.

15. A payment method using face information performed by a server, the payment method comprising:
receiving a generation request for fixed token information from an authentication server that stores at least one of a plurality of pieces of biometric authentication information in which biometric feature data related to a face of a user is encrypted and stored in a distributed manner;
generating the fixed token information in response to the generation request;
transmitting the generated fixed token information to the authentication server;
verifying the fixed token information, in response a payment request by a terminal together with the fixed token information being received; and
providing information related to payment approval based on a result of verifying the fixed token information.

16. The payment method of claim 15, wherein the receiving of the generation request for the fixed token information comprises receiving, from the authentication server, payment information identified based on biometric feature data extracted from a face image input by the user.

17. The payment method of claim 15, wherein the generating of the fixed token information comprises generating a random number as the fixed token information using the payment information.

18. The payment method of claim 15, wherein the biometric feature data is data extracted using a trained deep learning model from a two-dimensional face image acquired by capturing the face of the user using a three-dimensional depth camera.

19. A face information registration method performed by an authentication server, the face information registration method comprising:
receiving a face information registration request comprising a face image, customer information, and card information of a user from a terminal;
extracting biometric feature data for the face image;
generating biometric authentication information by encrypting the biometric feature data;
transmitting a payment information generation request comprising the customer information and the card information to a card processing server;
receiving payment information issued by the card processing server as a result of identifying the user;
mapping the biometric authentication information to at least one of the customer information and the payment information and storing same; and
transmitting a face information registration result of the user to the terminal.

20. The face information registration method of claim 19, wherein the generating of the biometric feature data comprises extracting the biometric feature data from face images received from the terminal using a trained deep learning model.

21. The face information registration method of claim 19, wherein the generating of the biometric authentication information by encrypting the biometric feature data comprises:
generating encrypted biometric information by encrypting the biometric feature data; and
generating a plurality of pieces of distributed biometric authentication information by separating the encrypted biometric information into a plurality of templates.

22. The face information registration method of claim 21, wherein the mapping of the biometric authentication information to at least one of the customer information and the payment information and storing of the same comprises mapping a facial identification number indicating a same user to the plurality of pieces of distributed biometric authentication information and storing same in a distributed manner in the authentication server and at least one distributed server.

23. The face information registration method of claim 22, wherein the facial identification number is mapped to at least one of the customer information and the payment information of the user and stored in a user table included in the authentication server.

24. A payment method using face information performed by an authentication server, the payment method comprising:
receiving a facial authentication request comprising a face image of a user from a terminal;
extracting biometric feature data from the face image;
determining whether biometric authentication information matching the biometric feature data is present among previously stored biometric authentication information;
requesting fixed token information from a card processing server using payment information and customer information corresponding to the matching biometric authentication information;
receiving fixed token information issued by the card processing server as a result of verifying the user based on the customer information and the payment information; and
transmitting a facial authentication result of the user to the terminal.

25. The payment method of claim 24, wherein the facial authentication result of the user comprises the fixed token information.

26. The payment method of claim 24, further comprising:
transmitting the fixed token information and a payment approval request for an item that the user desires to purchase to an affiliate server, in response to receiving the fixed token information from the card processing server.

27. The payment method of claim 24, wherein the searching for of the biometric authentication information matching the biometric feature data from among the previously stored biometric authentication information comprises determining whether combined biometric authentication information matching the extracted biometric feature data is present among combined biometric authentication information generated by combining a plurality of pieces of biometric authentication information that are stored in a distributed manner in the authentication server and at least one distributed server.

28. The payment method of claim 27, wherein the requesting of the fixed token information from the card processing server using the payment information and the customer information corresponding to the matching biometric authentication information comprises identifying at least one of customer information and payment information of a user corresponding to the matching biometric authentication information, through a user table in which a facial identification number mapped to the matching biometric authentication information is stored.

29. The payment method of claim 24, wherein the determining of whether the matching biometric authentication information is present comprises calculating a matching similarity between the biometric authentication information and the extracted biometric feature data, and determining that the biometric authentication information and the extracted biometric feature data match when the matching similarity exceeds a predetermined threshold similarity.
